(19) Europäisches Patentamt

European Patent Office

Office européen des brevets

(11) **EP 1 571 550 A2**

(12) **EUROPEAN PATENT APPLICATION**

(43) Date of publication:
07.09.2005 Bulletin 2005/36

(51) Int Cl.⁷: **G06F 9/44**

(21) Application number: **05250571.6**

(22) Date of filing: **02.02.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | (72) Inventors:<br>• **Cooper, Robert S.**<br>  **Columbia, SC 29212 (US)**<br>• **Sanders, Derek**<br>  **Columbia, SC 29204 (US)**<br>• **Tokarev, Vladimir Sergeyevich**<br>  **Columbia, SC 29205 (US)** |
| (30) Priority: **05.02.2004 US 772483** | |
| (71) Applicant: **Avaya Technology Corp.**<br>**Basking Ridge, NJ 07920 (US)** | (74) Representative: **Williams, David John et al**<br>**Page White & Farrer,**<br>**54 Doughty Street**<br>**London WC1N 2LS (GB)** |

(54) **Methods and apparatus for providing context and experience sensitive help in voice applications**

(57)   Systems and techniques for improved user prompting in the event of voice recognition failures. A system according to one aspect of the invention includes a central server hosting various modules employing voice recognition in order to interpret user inputs. When a module fails to recognize an input, it invokes a help application that selects an appropriate help prompt. The help application has access to user information including information indicating the user's experience with each function of each module. The help application receives notification of the module and function being used when the unrecognized input was received and examines the user information to determine the user's experience with the module and function. The help application categorizes a user as belonging to an experience category, such as novice, intermediate and expert based on the user's experience with the function and selects a help prompt associated with the user's experience with the function.

**EP 1 571 550 A2**

## Description

Field of the Invention

The present invention relates generally to improvements in automated voice response systems. More particularly, the invention relates to advantageous systems and techniques for providing help prompts and other assistance to a user of a voice response system.

Background of the Invention

Automated voice response systems, particularly systems employing speech recognition, must frequently provide guidance to a user so that the user may properly format his or her inputs and repeat inputs that were not properly recognized by the system. In order to achieve user satisfaction, voice response systems must provide enough help to users so that the user's inputs can be interpreted accurately. In addition, the help provided by the systems must not be too time consuming for a user. The nature of voice response systems makes them particularly prone to consume too much of a user's time because much of the information presented by a system, particularly help information, is presented in sequence. The information a user needs to hear may be preceded by other information, such as menu choices, that are of no interest to the user.

Frequently, a voice response application will find itself in an error state, either because the user did not provide a response within a predetermined timeout period, because the application misidentified the user's input, or because the user's input was not a valid response. In such a case, the application must attempt to provide a prompt to the user to help the user provide a correct response.

One approach to providing user help that is not excessively burdensome is contextual help. Contextual help provides prompts that are based on the user's position in the application. For example, if a user is listening to voicemail, one set of prompts is provided. If a user is searching a directory in order to place a call, another set of prompts is provided. Such a method of selecting prompts helps reduce the number of choices presented to the user, but typical present day systems do not sufficiently advantageously distinguish between users. Expert users may know all the different inputs that are required for each stage of an application, other users may be very experienced with some portions of the application but not with other portions, and relatively inexperienced users are likely to be unfamiliar with the inputs required for a system and to need fairly extensive information, such as a relatively complete list of available input choices, when help is needed.

In typical prior art systems, however, little or no distinction is made between users. Instead, because of the necessity that all users be provided with enough information to enable them to provide a correctly formatted input that will achieve the result they desire, more experienced users are forced to listen to much more extensive prompts than they need, even when a prompt was given because the system failed to correctly interpret the user's input. Systems that provide extensive help to all users waste time and cause significant dissatisfaction among users that do not require extensive help. Conversely, if a system provides help that is insufficiently detailed for users requiring it, that lack of detail can be frustrating to those users. There exists, therefore, a need for automated voice response systems that are capable of determining the experience level of a user for various stages of an application and for providing help that takes into account the particular user's level of experience or ability to successfully work with the stage of the application for which help is to be given.

Summary of the Invention

A system according to one aspect of the invention includes a central server hosting various modules providing services to users. The modules may suitably employ voice recognition in order to interpret user inputs. When a module fails to recognize an input, it invokes a help application that selects an appropriate prompt for presentation to the user. The help application has access to user information that includes information indicating the user's experience with each function of each module. The help application receives notification of the module and function being used when the unrecognized input was received and examines the user information to determine the user's experience with the module and function. The help application may suitably categorize a user as belonging to an experience category, such as novice, intermediate or expert based on the user's level of experience with the function. The help application selects a help prompt associated with the user's level of experience with the function and presents it to the user. The use of context and experience information in selection of a prompt is also discussed in "Methods and Apparatus for Context and Experience Sensitive Prompting in Voice Applications," U.S. Patent Serial No. 10/772,829, assigned to a common assignee with the present invention and filed on even date herewith, and incorporated herein by reference in its entirety.

A more complete understanding of the present invention, as well as further features and advantages of the invention, will be apparent from the following Detailed Description and the accompanying drawings.

Brief Description of the Drawings

Fig. 1 illustrates a system employing user and context sensitive help according to an aspect of the present invention; and
Fig. 2 illustrates a process of voice response employing user and context sensitive help according to an aspect of the present invention.

Detailed Description

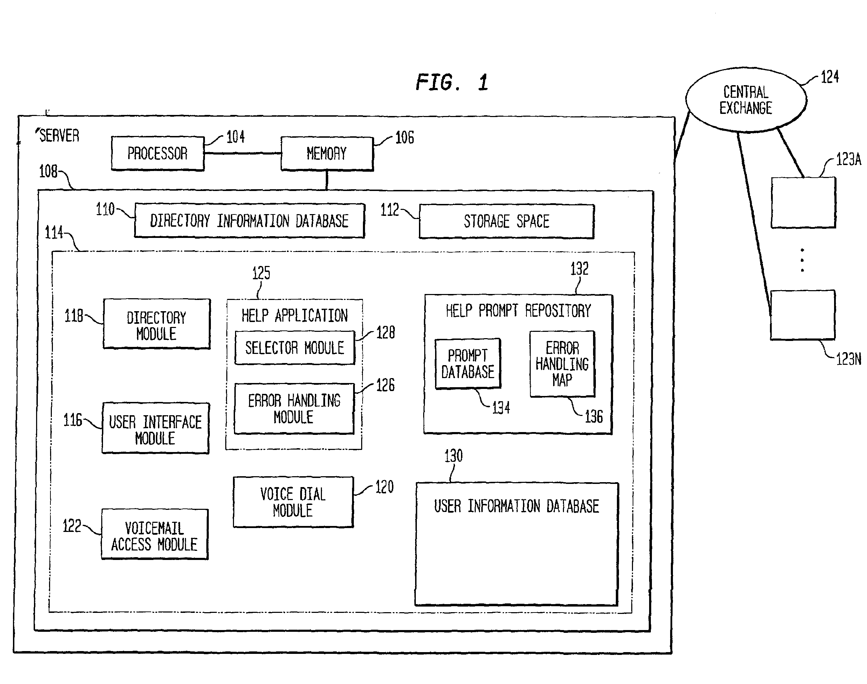

Fig. 1 illustrates a system 100 employing user and context sensitive help according to an aspect of the present invention. For purposes of illustration, the system 100 is a central telephone system providing telephone services and related services, such as directory lookup, voice dialing and voice mail to users. It will be recognized, however, that a system such as the system 100 may suitably be implemented so as to provide any of a number of services. For example, a system may provide bank account information to customers or potential customers or may be used in a customer service center, allowing selection of prerecorded information for some problems and referring a customer to an appropriate agent for other problems.

The system 100 may suitably comprise a central server 102, including a processor 104, memory 106 and long term storage 108. The server 102 hosts or has access to information and data storage facilities of interest to users, for example, directory information and voice mail storage. The directory information may suitably be stored in a directory information database 110, hosted as a file on the long term storage 108, and the voice mail storage may be allocated to storage space 112 on the long term storage 108. It will be recognized that storage facilities such as the directory 110 and the storage space 112, and data such as the data stored therein, need not be hosted on the server 102, but may be hosted in any desired location or component. The system 100 may suitably host a voice response application 114, suitably implemented as software residing on the long term storage 108 and executed under the control of the processor 104. The voice response application 114 includes a user interface module 116 and a plurality of additional modules. As illustrated here, the additional modules are a directory module 118, a voice dial module 120 and a voicemail access module 122. The modules 118, 120 and 122 are invoked by the user interface module 116 as required, in response to a user's inputs.

Each user communicates with the server 102 by means of a telephone set such as the internal telephone sets 123A...123N. Such telephone sets may be part of an internal office phone system or may be external sets that connect to the server 102 by dialing a central exchange 124 communicating with the server 102. When a user makes an initial contact with the server 102, for example, by placing a call to the central exchange 124 or by picking up a handset of an internal telephone, the user interface module 116 provides an initial prompt to the user and receives user inputs. For example, the user interface module 116 may generate a voice response such as "What would you like to do?" Depending on the user's response, the user interface module 116 invokes the module 118, 120 or 122, as appropriate. The module then issues responses, receives user inputs and takes actions, such as placing a call or retrieving voice mail, in order to perform the service desired by the user. If a user response is not recognized by the module receiving it as an input, or if a timeout error occurs, the module invokes a help application 125 so that assistance may be provided to the user. When a module invokes the help application 125, the module passes information identifying the module, as well as information identifying the function being performed when the error or unrecognized input causing invocation of the help application 125 occurred.

The help application 125 provides an appropriate prompt to the user in order to assist the user in providing the correct response to achieve the action desired by the user. The help application 125 suitably includes an error handling module 126 and a selector module 128. The error handling module 126 receives notification that an error has occurred, and maintains a record of consecutive errors. The error handling module 126 receives identification of the particular one of the modules 118, 120, and 122 for which help is required and identification of the function for which help is required, and passes this information to the selector module 128. The module and function for which help is required may suitably be based on identification of the module invoking the help application 125 and the function being executed by that module. In addition, the error handling module 126 passes to the selector module 128 proficiency information for the user, indicating the user's facility with the function being executed and with the use of the system 100 as a whole. The proficiency information may suitably be taken from a user information database 130. The selector module 128 uses the proficiency information to select or create an appropriate prompt to be provided to the user. The selector module 128 may suitably select a prompt from a help prompt repository 132, according to a set of rules implemented by the selector module 128. The help prompts may suitably be stored in a help prompt database 134 stored in the repository 132.

Alternatively, the selector module 128 may create a prompt based on information stored in the database 134, taking into consideration the module and function information received from the module invoking the help application, as well as proficiency information taken from the database 130.

The prompt delivered to the user may suitably be based on the user's proficiency, as indicated by information contained in a user record stored in the database 130. Each user record may suitably include a function usage tally for each function, indicating the number of times the user has successfully performed the function. Such a function usage tally may be interpreted to determine the user's expected level of proficiency. Prompts are suitably oriented toward novice, intermediate or expert users, although it will be recognized that any number of user proficiency categories may be defined and that prompts may be oriented toward as many user proficiency categories as are desired.

The selector module 126 may suitably employ predetermined criteria for distinguishing between novice, intermediate and expert users and may adapt prompts to the appropriate level of user expertise based on the user's proficiency information. Alternatively, the prompts stored in the prompt repository may suitably be organized according to module, function and function usage tally. When invoked, the selector module 126 receives or looks up module, function and function usage tally information, and the selector module 128 may use this information as an index for searching the database 134.

For example, the database 134 may include a comprehensive explanatory prompt to be presented if a timeout error occurs when a user with no experience using the system 100 makes no response to an initial prompt presented by the user interface module 116. The prompt might be a comprehensive recitation of all the functions that are available, and might be associated with a function usage tally of 0 for all functions. The selector module 128 would simply search the database 134 for the prompt associated with the user interface module 116 and also associated with a function usage tally of 0.

Each of the modules 116, 118, 120 and 122 has access to the user information database 130. The user information database 130 includes a usage history for each user. In the embodiment discussed here, the usage history for a user includes a tally for each function, indicating the number of times the user has successfully employed the function. It will be recognized, however, that alternative techniques for describing a user's usage history are possible. For example a proficiency score may be maintained, with the score taking into account information such as the number of errors made when using the function and the number of repetitions and prompts that have been required.

The usage history for a user is similarly organized by module. That is, the user's usage history for the functions carried out by the module 116 are grouped together, the user's usage history for the functions carried out by the module 118 are grouped together, and so on. This organization provides a simple and convenient way for a module to retrieve information relating to a user's help requirements for a particular function and to provide this information to the help application 125. For example, the voicemail module 122, upon receiving an unrecognized input from a user, searches the user information database 130 to find a user entry for the user from whom the input was received. The voicemail module 122 searches the user entry for the function with which the user was engaged. The voicemail module 122 obtains the user's usage tally for the function and passes information indicating the module and function being used and the usage tally for the user to the help application 125. The help application 125 uses the usage tally as an index to search the prompts related to the function with which the user was engaged and to select the prompt associated with the user's usage tally value for the function. The prompt is then passed to the user interface module 116, which presents the prompt for the user, suitably by playing the prompt using a sound recorder or a voice synthesizer.

The help prompts stored in the database 134 may suitably be organized by module, by functional area and by experience category. The database 134 includes a collection of prompts for each of the modules 118-122. To take an example, the voice mail access module 122 may include the functions "play messages," "next message," "delete message," "repeat message" and "save message." Depending on a user's facility with each function, different help messages may be needed to help the user provide a correct voice input for a particular function. Thus, for example, the database 134 may include three prompts for each of the functions performed by the module 122. The prompts for each function may include a prompt directed to novice users, a prompt directed to intermediate users and a prompt directed to expert users. It will be recognized that additional experience categories may be employed.

One example of a prompt might be one directed toward an expert user of the "play messages" function of the "voicemail access" module. An expert user might need only a simple and short prompt, such as an indication that the user's input was not recognized. A suitable prompt for such circumstances might be "I beg your pardon?" and might be characterized and indexed as "voicemail access, play messages, expert user," or by a suitable symbolic or numerical representation of such indexing. An exemplary technique of organizing and indexing prompts, that may be suitably employed in constructing and searching the database 134, is as follows. The prompts are grouped in the database 134 according to the module with which they are associated, and the search for a particular prompt is performed in the group of prompts associated with the module being used. Each module performs a number of different functions, and a number of experience levels may be associated with each function. The prompts for each module are organized in the form of an array $P(X, g(F_x))$, where

P is the prompt to be played,

X indicates the function being performed, and

$g(F_x)$ indicates the experience category associated with the prompt P, where $F_x$ is the user's usage tally for the function X. The value of $F_x$ is the number of times a user has successfully used the function X. For example, if the function under consideration is the function "repeat messages," the value of $F_x$ would be the number of times a user had successfully used that function.

The value of $g(F_x)$ may suitably be an integer and may be assigned a value depending on the value of $F_x$. If a user may have one of m different experience levels for the function X, the value of $g(F_x)$ may suitably be defined as follows:

$$g(F_x) = 1 \text{ if } 0 \leq F_x < C_1$$

$$g(F_x) = 2 \text{ if } C_1 \leq F_x < C_2$$

$$g(F_x) = 3 \text{ if } C_2 \leq F_x < C_3$$

$$...$$

$$g(F_x) = m \text{ if } F_x > C_{m-1}.$$

The values of $C_1$, $C_2$, $C_3$, and so on, are chosen based on an estimate of how many successful uses of a function puts a user into a particular experience category. For example, if a novice user is considered to be a user who has successfully used a function four times or less, the value of $C_1$ for that function may be set to 5. An intermediate user may be one who has used the function 5 to 24 times, in which case the value of $C_2$ is set to 25, and an advanced user may be one who has successfully used the function 25 times or more. In this example, there would be only three categories, that is, novice, intermediate and expert, and values would be assigned only to $C_1$ and $C_2$.

To take an example, suppose that a user, John, is reviewing his voicemail. The voicemail module 122 performs five functions. These functions are playing a message, skipping to the next message, deleting a message, repeating a message and saving a message. The user record therefore includes an entry for the use of the voicemail module 122. The user information database 130 includes a user entry for John. The entry includes function tallies indicating the user's proficiency with each of the functions performed by the voicemail module 122, and is organized as follows:

| Module | Function | Function usage tally |
|--------|----------|----------------------|
| Voicemail | Play message | 18 |
| Voicemail | Next message | 43 |
| Voicemail | Delete message | 32 |
| Voicemail | Repeat message | 13 |
| Voicemail | Save message | 0 |
| Voicemail | Login | 18 |

The tally for total logins indicates the number of times John has employed the voicemail module 122. John's user entry indicates that John has a fair amount of experience using the functions of the voicemail module 122, except for the save message function. Therefore, if John provides an input that is not understood, the help application 122 will provide relatively brief help prompts for functions other than the "save message" function.

Suppose that John accesses the system 100 in order to review his voice mail. One message is stored in the system 100. The voicemail module 122 provides the message "You have new messages." John responds, "Play my messages." The message is played and John interrupts the playing, saying "delete this message." The voicemail module 122 deletes the message and provides the response "message has been deleted." At this point, no input errors have occurred and no help prompts have been needed. However, additional information has been generated relating to John's proficiency as a user of the system 100. Accordingly, the function tallies for the functions that John has used are incremented. The value of the "Play messages" tally is now 19 and the value of the "Delete message" tally is now 33.

Now, suppose that John uses the voicemail module 122 to access his voicemail again. During the playing of a message, John interrupts, saying "Keep this message." This input is unrecognized and elicits a help prompt. A conventional system might, at this point, list all the different commands there were available. However, John's user record indicates that he has proficiency in all functions of the voicemail module 122 other than the save messages function. Therefore, the help application 125 provides a prompt directed toward supplying the information that John is most likely to require. Specifically, the help application 125 provides the following help prompt: "I'm sorry, could you repeat that please? Remember, 'save this message' will save the message for future use." The voicemail module 122 then repeats the introductory prompt, "What would you like to do?" John responds, "save this message." The function usage tally for the "save messages" function is then incremented by one.

It will be observed that the help application 125 does not recite an extensive list of all the functions that are available for John, because the help application 125 is provided with information indicating that the user is proficient with all functions of the voicemail module 122 other than the "save messages" function. As a result, the help application 125 is able to provide an abbreviated prompt that includes explanatory information relating to the function with which the user is least familiar. Because the user is least familiar with "save messages" function, the "save messages" function is the function for which the user is most likely to have made an incorrect or unrecognized input.

The help application 125 therefore provides a prompt comprising a short repetition request followed by a reminder of the correct command for the "save messages" function. This prompt is appropriate for either a recognition error by the voicemail module 122 or an error by the user. The prompt identifies and explains the command that is the most likely subject of a user error, but is so short that it is likely to be relatively unobtrusive to the user if the reason for the error is simply that the system failed to recognize the user input.

Now, consider another example involving Mary, an expert user. The user information database 130 includes a user entry for Mary. The user entry for Mary includes function tallies relating to Mary's experience in using the voicemail module 122. The user entry is organized as follows:

| Module | Function | Function usage tally |
|---|---|---|
| Voicemail | Play message | 188 |
| Voicemail | Next message | 204 |
| Voicemail | Delete message | 197 |
| Voicemail | Repeat message | 56 |
| Voicemail | Save message | 39 |
| Voicemail | Logins | 188 |

The user entry indicates that Mary has extensive experience with all functions of the voicemail module 122. Therefore, if an unrecognized input is detected, the help application 125 will treat the unrecognized input as a recognition error. That is, an assumption will be made that the user provided a correct response, but the response was simply incorrectly interpreted by the voicemail module 122. For example, the following error action may take place. The voicemail module 122 provides the prompt "You have three new messages." At this point, a noise is detected, such as the slamming of a car door. This noise is interpreted as an unrecognized input and the help application 125 is invoked. The help application 125 examines Mary's user entry and determines that she is an expert user of the voicemail module 122. A determination is therefore made that the unrecognized input was simply the result of a misinterpreted response and a simple repetition prompt is presented. Thus, the help application 125 simply presents a prompt such as "Could you repeat that?" or "Excuse me?"

With any category of user, the help application 125 detects repeated errors and provides more elaborate help prompts if errors are consecutively repeated. The help prompts preferably become broader as more consecutive errors occur. Thus, the first help prompt for an expert user might be a repetition prompt, the next two prompts might include the command for the particular function the user was performing when the error was detected, the next two prompts might include all commands for the module being employed and succeeding prompts might include all commands for all modules. The error handling module 126 refers to an error handling map 136 stored in the prompt repository 132. The error handling map 136 includes a set of rules for handling consecutive errors for each module, function and experience level.

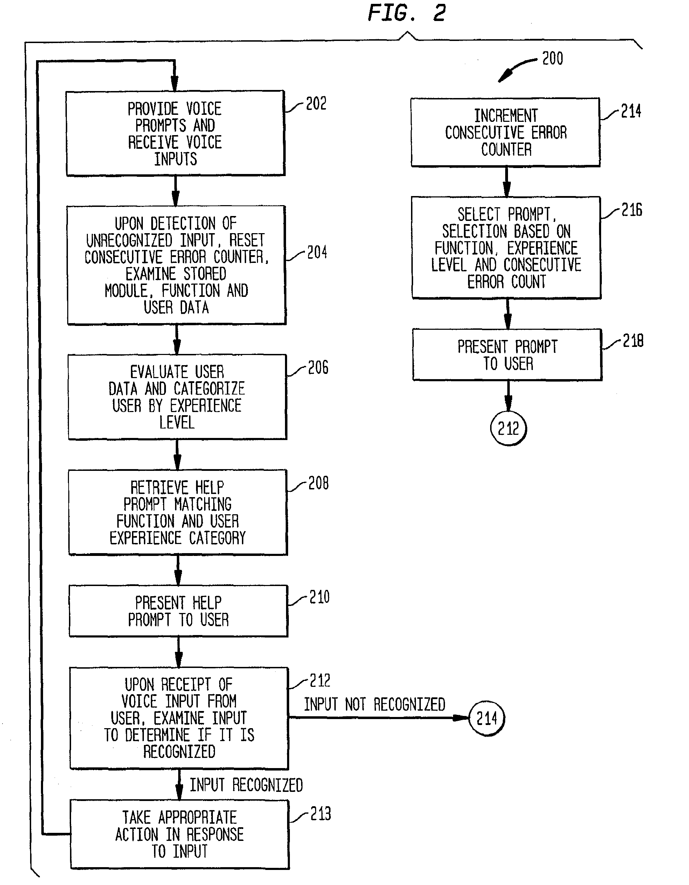

Fig. 2 illustrates the steps of a process 200 for voice response including user and context sensitive help according to an aspect of the present invention. At step 202, upon initiation of contact by a user, voice prompts are provided to the user and voice inputs are received from the user, with voice recognition performed on the voice inputs in order to identify user commands and user supplied data in order to perform services required by the user. At step 204, upon detection of an unrecognized input, a consecutive error counter is reset and previously stored module, function and user data is examined in order to provide information required to select an appropriate help prompt for the user. The module and function data indicates the function the user was attempting to accomplish at the time the unrecognized input was detected, and the user data indicates the user's level of experience with the function and with the voice response system as a whole. At step 206, the user data is evaluated and the user is categorized by experience level, for example, novice, intermediate, or expert. At step 208, a help prompt matching the function and the user's experience category is retrieved from a previously assembled collection of help prompts indexed by module, function and experience category. At step 210, the help prompt is presented to the user. At step 212, upon receipt of a voice input from the user, the input is examined to determine if it is recognized. If the input is recognized, the process proceeds to step 213, appropriate action is taken in response to the input and the process returns to step 202. If the input is not recognized, the process proceeds to step 214 and the consecutive error counter is incremented. At step 216, a selection is made from a collection of prompts indexed by function, user experience level and consecutive error counter value. In one embodiment, the indexing of the collection is advantageously arranged so that as the value of the consecutive error counter increases, the consecutive error counter value becomes more and more important in the prompt selection, and when the value of the consecutive error counter is relatively high, the other considerations become irrelevant. The reason for this choice of strategy is that it can reasonably be assumed that a number of consecutive errors indicate that the user needs comprehensive help for the system, regardless of the function or the user's experience level. At step 218, the selected prompt is presented to the user and the process returns to step 212.

While the present invention is disclosed in the context of a presently preferred embodiment, it will be recognized that a wide variety of implementations may be employed by persons of ordinary skill in the art consistent with the above discussion and the claims which follow below.

**Claims**

1. A voice recognition system comprising:

   a plurality of modules for receiving voice inputs from a user and performing services based on the user response to the voice inputs; and
   a help application for selecting a help prompt for presentation to a user upon receipt of an unrecognized or erroneous input, the help application being operative to identify an experience level of a user and select a help prompt appropriate to the user's experience level.

2. The system of claim 1, wherein a function and module being employed upon receipt of an unrecognized or erroneous input is identified to the help application and the help prompt selected is chosen based on stored user information relating to the user.

3. The system of claim 2, wherein the user information includes information indicating the user's proficiency in using the system.

4. The system of claim 3, wherein the information indicating the user's proficiency includes information indicating the user's proficiency with each function available to the user.

5. The system of claim 4, wherein the information indicating a user's proficiency with each function includes a function usage tally for each function, the function usage tally for a function indicating a number of times the user has successfully employed the function.

6. The system of claim 5, wherein the help application employs the function usage tally for the function being used when an unrecognized or erroneous input was detected, in order to determine a user experience category for the user with respect to the function.

7. The system of claim 6, wherein the help application determines the user experience category by selecting an experience category associated with a range of function usage tally values within which the user's function usage tally for the function falls.

8. The system of claim 7, wherein the help application tracks consecutive errors and recognition failures and selects appropriate help prompts in the case of consecutive errors and recognition failures.

9. The system of claim 8, wherein the user's function usage tally for a function is updated upon each successful use of that function.

**10.** A method of help prompt selection, comprising the steps of:

identifying a function being employed when an unrecognized input was received;
identifying a user experience level for the function; and
selecting a help prompt appropriate for the user experience level for the function.

**11.** The method of claim 10, wherein the step of identifying the user experience level comprises assigning the user to a particular experience category and wherein the step of selecting a help prompt includes selecting a prompt associated with the experience category to which the user belongs.

**12.** The method of claim 11, wherein the step of identifying the user as belonging to a particular experience category includes examining user information indicating the experience category to which the user should be assigned.

**13.** The method of claim 11, wherein the step of examining user information includes examining a function usage tally for the function being employed when an unrecognized input was received and assigning the user to an experience category associated with a range of function usage tally values within which the user's function usage tally for the function falls.

**14.** The method of claim 13, further comprising the steps of:

detecting consecutive errors or recognition failures; and
upon detection of consecutive errors or recognition failures, selecting a prompt appropriate for the user's experience level and for the number of consecutive errors or recognition failures detected.

**15.** The method of claim 14, wherein the selection of a prompt is more dependent on the number of errors or recognition failures detected as the number of consecutive errors or recognition failures increases.

**16.** The method of claim 15, further comprising a step of updating the user's function usage tally for a function upon each successful use of that function.

FIG. 1

EP 1 571 550 A2

# FIG. 2

PROVIDE VOICE PROMPTS AND RECEIVE VOICE INPUTS ⌐202

UPON DETECTION OF UNRECOGNIZED INPUT, RESET CONSECUTIVE ERROR COUNTER, EXAMINE STORED MODULE, FUNCTION AND USER DATA ⌐204

EVALUATE USER DATA AND CATEGORIZE USER BY EXPERIENCE LEVEL ⌐206

RETRIEVE HELP PROMPT MATCHING FUNCTION AND USER EXPERIENCE CATEGORY ⌐208

PRESENT HELP PROMPT TO USER ⌐210

UPON RECEIPT OF VOICE INPUT FROM USER, EXAMINE INPUT TO DETERMINE IF IT IS RECOGNIZED ⌐212

INPUT NOT RECOGNIZED → (214)

INPUT RECOGNIZED

TAKE APPROPRIATE ACTION IN RESPONSE TO INPUT ⌐213

200

INCREMENT CONSECUTIVE ERROR COUNTER ⌐214

SELECT PROMPT, SELECTION BASED ON FUNCTION, EXPERIENCE LEVEL AND CONSECUTIVE ERROR COUNT ⌐216

PRESENT PROMPT TO USER ⌐218

(212)